Europäisches Patentamt

European Patent Office

Office européen des brevets

(19)

(11) Veröffentlichungsnummer: **0 406 457 A1**

## (12) EUROPÄISCHE PATENTANMELDUNG

(21) Anmeldenummer: 89112107.1

(22) Anmeldetag: 03.07.89

(51) Int. Cl.5: **H04L 9/06**

(43) Veröffentlichungstag der Anmeldung:
**09.01.91 Patentblatt 91/02**

(84) Benannte Vertragsstaaten:
**DE FR**

(71) Anmelder: **Zahn, Matthias**
**Kapuzinerstrasse 20**
**D-8000 München 2(DE)**

(72) Erfinder: **Zahn, Matthias**
**Kapuzinerstrasse 20**
**D-8000 München 2(DE)**

(54) **Verfahren zum Verschlüsseln und Entschlüsseln von Daten.**

(57) Gegenstand der Erfindung ist ein Verfahren zum Ver- und Entschlüsseln von Daten, das in Teilschritten abläuft und bei dem die Schlüsselwerte für die einzelnen Teilschritte in Abhängigkeit von den zu verschlüsselnden Daten unter Zuhilfenahme eines elektronischen Schaltkreises verändert werden. Die zur Entschlüsselung erforderlichen Schlüsselwerte werden hierbei ohne zusätzliche Hilfswerte aus den zu entschlüsselnden Daten gewonnen. Hierzu wird in jedem Teilschritt des Verfahrens der Teil der Daten, der zur Erzeugung des Schlüsselwertes herangezogen wird, nicht verschlüsselt und in jedem der Teilschritte des Verfahrens wird ein anderer Teil der zu bearbeitenden Daten zur Erzeugung der Schlüsselwerte herangezogen.

FIG 1

EP 0 406 457 A1

Xerox Copy Centre

## VERFAHREN ZUM VERSCHLÜSSELN UND ENTSCHLÜSSELN VON DATEN

Die Erfindung betrifft ein Verfahren zum Verschlüsseln und Entschlüsseln von Daten nach dem Oberbegriff des Patentanspruches 1.

Verschlüsseln heißt hierbei, daß auf zu verschlüsselnde Daten eine umkehrbare Funktion angewendet wird, die von einem Schlüsselwert abhängt. Dadurch können die verschlüsselten Daten nur durch nochmaliges Anwenden einer von einem Schlüsselwert abhängigen Funktion entschlüsselt werden. Die Funktionen und die Schlüsselwerte können hierbei identisch sein, sie können sich aber auch unterscheiden.

Gattungsgemäße Verfahren sind bekannt und unter anderem teilweise aus dem Artikel "BUILD A HARDWARE DATA ENCRYPTOR" von Steve Ciarcia, BYTE, Volume 11, Number 9, September 1986, Seiten 97 bis 110, hier "CIARCIA" genannt und teilweise in dem Buch "CRYPTOGRAPHY: A NEW DIMENSION IN COMPUTER DATA SECURITY" von Carl H. Meyer und Stephen M. Matyas, 1982, hier "MEYER et. al." genannt beschrieben.

Unter anderem aus Meyer et. al., Seite 113 ff. und Figur 3-4. auf Seite 117 ist ein Verfahren mit dem Namen "DATA ENCRYPTION STANDARD" (DES) bekannt. Bei diesem Verfahren werden die zu verschlüsselnden Daten in Blöcke aufgeteilt, wobei jeder Block in einen rechten und einen linken Unterblock aufgeteilt ist. Das Verfahren läuft in gleichartigen Teilschritten ab, wobei in jedem dieser Teilschritte auf den linken Unterblock eine von einem 48 Bit großen Teilschlüssel abhängige umkehrbare Funktion angewendet wird, während der rechte Unterblock in diesem Teilschritt nicht verschlüsselt wird. Daraufhin wird der rechte, unverschlüsselte Unterblock an der Stelle des linken Unterblockes gespeichert und das Verschlüsselungsergebnis des linken Unterblockes wird an der Stelle des rechten Unterblockes gespeichert, d.h., die Daten werden nach einem umkehrbaren Verfahren verändert.

Auf Seite 141 ff. wird beschrieben, daß der für einen Teilschritt erforderliche Teilschlüssel, der mit K(1) bis K(16) bezeichnet wird, von einem Schlüsselgenerator bereitgestellt wird. Bei diesen Verfahren unterscheiden sich die Teilschlüssel der einzelnen Teilschritte, jedoch ist jedem Teilschritt immer der gleiche Teilschlüssel zugeordnet.

Aus Meyer et. al. ist auf Seite 53 ff. ein Verfahren mit der Bezeichnung "STREAM CHIPERS" bekannt. Bei diesem Verfahren wird auf einen kontinuierlichen Datenstrom eine von einem kontinuierlich sich ändernden Schlüssel abhängige Funktion angewandt. Damit dieser Schlüssel nicht aus so vielen Werten bestehen muß, wie die zu verschlüsselnden Daten, kann er beispielsweise durch einen Pseudozufallsgenerator erzeugt werden, also einen Generator, der ein pseudozufälliges Datenwort in Folge produziert. Insbesondere kann dieser Pseudozufallsgenerator, wie in "Ciarcia" auf Seite 101 beschrieben ist, aus mehreren miteinander verknüpften Pseudozufallsgeneratoren bestehen. Damit die verschlüsselten Daten wieder entschlüsselt werden können, ist hierbei der gleiche Pseudozufallsgenerator erforderlich, der zur Verschlüsselung verwendet wurde. Außerdem ist es erforderlich, daß der Pseudozufallsgenerator an der gleichen Stelle zu laufen beginnt. Wenn der Pseudozufallsgenerator zum Verschlüsseln verschiedener Datenpakete immer an der gleichen Stelle beginnt, kann er leicht "abgehorcht" werden, d.h., man kann durch Verschlüsseln bekannter Daten die zur Entschlüsselung anderer Daten erforderlichen Werte ermitteln. Deshalb wird in Ciarcia auf Seite 110 vorgeschlagen, den Startwert öfter zu wechseln, also einen Initialisierungsvektor einzuführen.

Zur Bereitstellung des wechselnden Startwertes ist ein gewisser Aufwand erforderlich. Außerdem muß der Startwert, der zum Verschlüsseln von Daten verwendet wurde, zum Entschlüsseln dieser Daten mit den Daten übermittelt werden. Dies gilt insbesondere, wenn der Startwert in Abhängigkeit von den zu verschlüsselnden Daten festgelegt wird, da diese Daten nach der Verschlüsselung nicht mehr vorhanden sind.

In Ciarcia wird auf Seite 101 ein Schlüsselgenerator beschrieben, dessen Schlüsselwerte von den Ausgangswerten eines elektronischen Schaltkreises abhängen. Hierzu ergeben sich für den Fachmann beliebig viele äquivalente Ausführungsformen, die nicht Gegenstand dieser Erfindung sind.

Ciarcia beschreibt Schaltungsanordnungen, mit denen solche bekannte Verfahren durchgeführt werden können. Außerdem beschreibt er insbesondere auf Seite 102 ff. die Möglichkeit, einen Teil eines solchen Verschlüsselungsverfahrens durch einen entsprechend programmierten Microprozessor durchzuführen.

Die zum Verschlüsseln geeigneten Funktionen und die erforderlichen Ablaufroutinen sind dem Fachmann unter anderem aus der obengenannten Literatur bekannt und sind nicht Gegenstand dieser Erfindung.

Bekannte, oben beschriebene Verfahren wechseln entweder nicht kontinuierlich die Schlüsselwerte oder es sind zum rekonstruierbaren Wechseln der Schlüsselwerte Hilfswerte, wie z.B. Startwert oder Initialisierungsvektor, erforderlich.

Aufgabe der Erfindung ist das Bereitstellen eines Verfahrens zum Verschlüsseln und Entschlüsseln von Daten, bei dem die Schlüsselwerte gewechselt werden, ohne daß zusätzliche Hilfswerte erforderlich sind.

Diese Aufgabe wird durch ein Verfahren mit den Merkmalen des Patentanspruches 1 gelöst.

Günstige Ausgestaltungsformen sind Gegenstand von Unteransprüchen.

Gegenstand der Erfindung ist ein Verfahren zum Ver- und Entschlüsseln von Daten D, D', das in Teilschritten S1, S2, ... Sn abläuft und bei dem die Schlüsselwerte K für die einzelnen Teilschritte S1, S2, ... Sn in Abhängigkeit von den zu verschlüsselnden Daten unter Zuhilfenahme eines elektronischen Schaltkreises EC verändert werden. Die zur Entschlüsselung erforderlichen Schlüsselwerte K werden hierbei ohne zusätzliche Hilfswerte aus den zu entschlüsselnden Daten gewonnen. Hierzu wird in jedem Teilschritt S1, S2, ... Sn des Verfahrens der Teil A der Daten, der zur Erzeugung des Schlüsselwertes K herangezogen wird, nicht verschlüsselt und in jedem der Teilschritte S1, S2, ... Sn des Verfahrens wird ein anderer Teil der zu bearbeitenden Daten zur Erzeugung der Schlüsselwerte K herangezogen.

Im Folgenden wird das erfindungsgemäße Verfahren anhand der Figuren näher erläutert. Es zeigt:

Figur 1 den prinzipiellen Ablauf eines erfindungsgemäßen Verfahrens zum Verschlüsseln von Daten sowie ein Ausführungsbeispiel eines Teilschrittes eines solchen erfindungsgemäßen Verfahrens;

Figur 2 die gleichen Zusammenhänge für ein Verfahren zum Entschlüsseln von Daten.

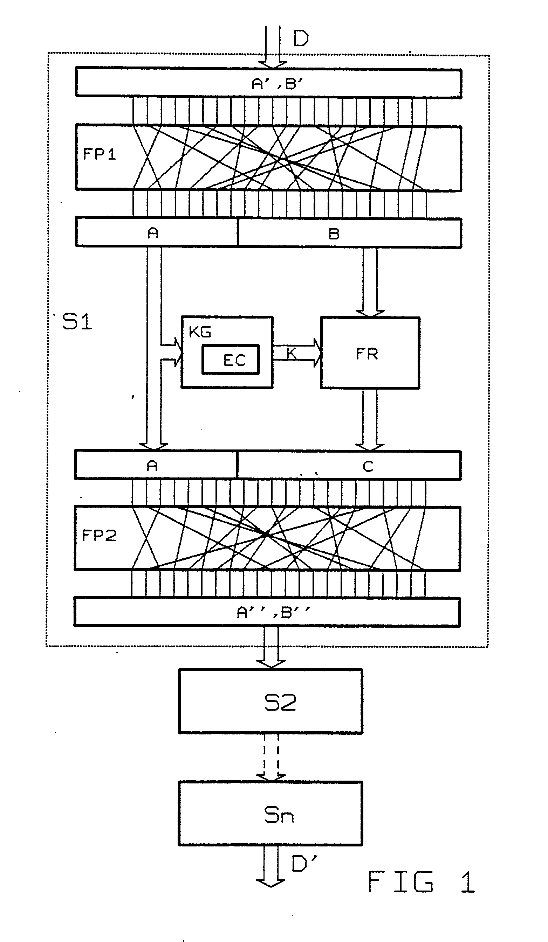

Figur 1 zeigt in Form eines Blockdiagramms den prinzipiellen Ablauf eines in mehreren Teilschritten S1, S2, ... Sn ablaufenden Verschlüsselungsverfahrens. Hierbei werden die zu verschlüsselnden Daten D in mehreren Teilschritten S1, S2, ... Sn verschlüsselt und die verschlüsselten Daten D' ausgegeben. Es ist günstig, die Anzahl der Teilschritte so zu wählen, daß der Verschlüsselungsvorgang mindestens folgende Kriterien erfüllt:

- Jedes Bit der verschlüsselten Daten D' sollte von jedem Bit der zu verschlüsselnden Daten D abhängig sein;

- bei einer Änderung eines Bits der zu verschlüsselnden Daten D sollte die Wahrscheinlichkeit einer Änderung jedes Bits der verschlüsselten Daten D' 50 % betragen.

Außerdem zeigt Figur 1 eine mögliche Ausführungsform eines Teilschrittes eines erfindungsgemäßen Verfahrens. Die Eingangsdaten A', B' dieses Teilschrittes werden nach einem Verfahren FP1 umkehrbar verändert. Ein solches Verfahren FP1 kann ein Vertauschen der einzelnen Bitpositionen bewirken, außerdem kann eine Invertierung oder eine andere beliebige umkehrbare Funktion vorgesehen sein. Dieses Verfahren hat zum Ziel, während der Ausführung aller Teilschritte S1, S2, ... Sn jedes Bit der zu verschlüsselnden Daten D mindestens einmal zu verschlüsseln.

Der Teil A der nach dem Verfahren FP1 bearbeiteten Daten dient als Eingangsgröße eines Schlüsselgenerators KG, wobei der am Ausgang dieses Schlüsselgenerators KG bereitgestellte Schlüsselwert jeweils von dieser Eingangsgröße A abhängt. Der Teil A der nach dem Verfahren FP1 bearbeiteten Daten wird innerhalb dieses Teilschrittes S1 nicht verschlüsselt. Der Rest der nach dem Verfahren FP1 bearbeiteten Daten, in Figur 1 mit B bezeichnet, wird unter Zugrundelegung einer von einem Schlüsselwert K abhängigen, umkehrbaren Funktion abgearbeitet und bildet den in Figur 1 mit C bezeichneten Datenteil. Der unverschlüsselte Datenteil A und der Datenteil C werden in diesem Ausführungsbeispiel nach einem Verfahren FP2 umkehrbar verändert. Auch dieses Verfahren FP2 muß lediglich umkehrbar sein, wie das Verfahren FP1. Außerdem sollte dieses Verfahren FP2 genau wie das Verfahren FP1 nicht von einem Schlüsselwert abhängen. Für einen erfindungsgemäßen Teilschritt S1, S2, ... Sn genügt es, nur entweder das Verfahren FP1 oder das Verfahren FP2 anzuwenden. Wichtig ist lediglich, daß innerhalb jedes Teilschrittes mindestens ein Teil der als Eingangsgröße des Schlüsselgenerators KG dienenden Daten A in der Ausgangsgröße A'', B'' nicht die gleiche Bitposition aufweist wie in der Eingangsgröße A', B', so daß nach Abarbeiten aller Teilschritte S1, S2, ... Sn jedes Bit der Eingangsdaten D mindestens einmal verschlüsselt worden ist. Welche umkehrbare, möglichst nicht von einem Schlüsselwert abhängige Funktion dem Verfahren FP1 oder FP2 zugrundeliegt, ist für ein erfindungsgemäßes Verfahren ansonsten prinzipiell nicht wichtig.

Die Ausgangsgröße A'', B'' eines Teilschrittes enthält also einen Teil der Eingangsgröße A', B' dieses Teilschrittes, der nach einer von einem Schlüsselwert K abhängigen resultierenden Funktion FP1, FR, FP2 verändert ist und einen Teil der Eingangsgröße A', B', der nach einer nicht von einem Schlüsselwert abhängigen Funktion FP1, FP2 verändert ist.

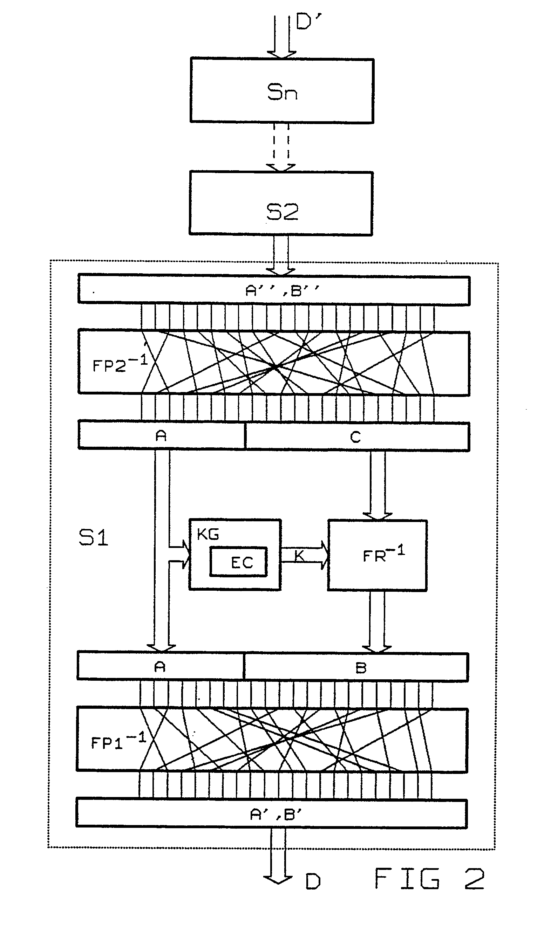

Ein einfaches Beispiel für eine umkehrbare, nicht von einem Schlüsselwert abhängige Funktion FP1, FP2 ist das Vertauschen der Bitpositionen, d.h., die Bitpositionen der Eingangsdaten unterscheiden sich von den Bitpositionen der Ausgangsdaten. Eine solche Funktion kann durch eine feste Verdrahtung, wie in Figur 1 und Figur 2 schematisch dargestellt, aber auch durch eine entsprechend programmierte Datenverarbeitungsanlage, beispielsweise einen Microprozessor, realisiert sein.

Ein anderes Beispiel einer solchen Funktion ist das Bilden des Komplements, d.h., die Ausgangsdaten sind jeweils komplementär zu den Eingangsdaten. Auch die Identität wäre eine zulässige Funktion.

Ein Beispiel für eine von einem Schlüsselwert abhängige Funktion ist die Exklusiv-ODER-Funktion. Eine Realisierung in Form eines auf einer solchen Funktion beruhenden Verfahrensschrittes eines elektrischen Schaltkreises und auch eine Realisierung unter Zuhilfenahme eines entsprechend programmierten Microprozessors sind aus "Ciarcia" bekannt. Ein oben beschriebenes, erfindungsgemäßes Verfahren kann vollständig mit Hilf einer elektrischen Schaltung bzw. eines elektronischen Schaltkreises durchgeführt werden, es kann aber auch mit Hilfe einer entsprechend programmierten Datenverarbeitungsanlage durchgeführt werden. Wesentlich für die Erfindung ist lediglich, daß zumindest ein die Schlüsselwerte K des Schlüsselgenerators KG beeinflussender elektronischer Schaltkreis EC vorhanden ist. Es ist nicht ausgeschlossen, daß der Schlüsselgenerator KG teilweise durch einen entsprechend programmierten Microprozessor realisiert ist. Da die Sicherheit eines erfindungsgemäßen Verfahrens jedoch sehr stark davon abhängt, daß der Zusammenhang zwischen den Eingangsdaten A des Schlüsselgenerators KG und den entsprechenden Schlüsselwerten K nicht ermittelt wird, ist es empfehlenswert, den gesamten Schlüsselgenerator KG in Form eines elektronischen Schaltkreises EC zu verwirklichen. Ein sehr einfaches Ausführungsbeispiel für einen solchen Schlüsselgenerator KG ist ein programmierter nichtflüchtiger Speicher, bei dem die Ein gangsdaten A die Adreßdaten liefern und in Abhängigkeit von diesen Adreßdaten die entsprechenden Speicherinhalte ausgegeben werden.

Will man mehrere Ver- und Entschlüsselungsgeräte zur Verfügung haben, die nach dem gleichen erfindungsgemäßen Verfahren arbeiten, so kann man diese zwar unterschiedlich aufbauen, beispielsweise andere Funktionen zugrundelegen, es genügt aber auch, sicherzustellen, daß der Schlüsselgenerator KG jedes dieser Geräte auf die gleichen Eingangsdaten A unterschiedliche Schlüsselwerte K liefert. Das ist durch unterschiedliches Codieren der einzelnen Schlüsselgeneratoren möglich. Aus Sicherheitsgründen ist es hierbei empfehlenswert, die Codierung jeweils in einem elektronischen Schaltkreis EC vorzunehmen. Ist der elektronische Schaltkreis EC mit Codierungswerten codierbar, so kann er sich von allen ähnlichen, also anders codierten Schaltkreisen EC unterscheiden. Besteht der Schlüsselgenerator KG beispielsweise, wie bereits oben gesagt, aus einem Speicher, und legen die Eingangswerte A des Schlüsselgenerators KG Adreßwerte des Speichers fest, so kann die Codierung durch entsprechende Programmierung des Speichers vorgenommen werden oder dadurch, daß die Codierungswerte beispielsweise die Spalten-Adressen der Schlüsselwerte festlegen und die Eingangsdaten A die Zeilen-Adressen der Schlüsselwerte K festlegen. Außerdem können die Codierungswerte über eine Exklusiv-ODER-Funktion mit den Eingangsdaten A des Schlüsselgenerators KG oder den Ausgangswerten eines Speichers verknüpft werden. Es ist jedoch empfehlenswert, den Schlüsselgenerator etwas komplizierter zu gestalten, weil dadurch die Sicherheit des Verschlüsselungsgerätes erhöht wird. Wichtig für den Schlüsselgenerator KG ist nur, daß er in eindeutiger Abhängigkeit von Eingangsdaten A Schlüsselwerte K ausgibt und daß bei eventueller Codierbarkeit des Schlüsselgenerators KG diese Schlüsselwerte K außerdem eindeutig von den Codierungswerten abhängen.

Wenn der verwendete Schlüsselgenerator KG codierbar ist und die Codierungswerte in einem elektronischen Schaltkreis EC enthal ten sind und wenn außerdem dieser elektronische Schaltkreis EC von dem übrigen, zur Durchführung des erfindungsgemäßen Verfahrens erforderlichen Gerät getrennt werden kann, so können verschiedene Benutzer unter Zuhilfenahme des für sie codierten elektronischen Schaltkreises EC auf dem gleichen Gerät Daten verschlüsseln, ohne daß ein jeweils anderer Benutzer diese verschlüsselten Daten wieder entschlüsseln könnte. Solche von dem übrigen Gerät trennbaren elektronischen Schaltkreise EC können beispielsweise in Chipkarten enthalten sein oder über eine Schittstelle an das Gerät anschließbar sein.

Es sind erfindungsgemäße Verschlüsselungsverfahren denkbar, die für jeden Teilschritt S1, S2, ... Sn die Daten nach unterschiedlichen Funktionen FP1, FP2, FK beeinflussen. Wenn bei solchen Verfahren innerhalb eines Teilschrittes beispielsweise ein Teil der Daten B unter Zugrundelegung einer von einem Schlüsselwert abhängigen, umkehrbaren Funktion FR abgearbeitet wird und im nächsten Teilschritt ein anderer Teil der Ausgangsdaten dieses Teilschrittes unter Zugrundelegung einer von einem Schlüsselwert K abhängigen Funktion abgearbeitet wird, so ist dies äquivalent dazu, daß die Daten einmal nach einem vorgegebenen Verfahren FP1 verändert worden sind. Diesen Verfahren FP1, FP2 würde in diesem speziellen Fall eine Permutationsfunktion zugrundeliegen.

Ein einfaches aber trotzdem sicheres erfindungsgemäßes Verfahren kann dadurch realisiert werden, daß der Ablauf der einzelnen Teilschritte S1, S2, ... Sn identisch ist und somit nur eine Schaltung bzw. eine Ablaufroutine für alle Teilschritte S1, S2, ... Sn benötigt wird.

Figur 2 zeigt in Form eines Blockschaltbildes ein Verfahren zum Entschlüsseln von Daten D', die vorher nach einem in Figur 1 gezeigten Verfahren aus Daten D verschlüsselt worden sind. Zum Entschlüsseln von Daten D′ sind genauso viele Teilschritte Sn ... S2, S1 erforderlich wie zur Verschlüsselung dieser Daten. Die den einzelnen Teilschritten S1, S2, ... Sn bei der Ver schlüsselung zugrundeliegenden Funktionen FR, FP1, FP2 werden zur Entschlüsselung jeweils durch ihre Umkehrfunktionen FR⁻¹, FP1⁻¹ und FP2⁻¹ ersetzt und die Teilschritte Sn ... S2, S1 werden in umgekehrter Reihenfolge abgearbeitet. Weil bei der Verschlüsselung in jedem Teilschritt ein Datenteil A nicht verschlüsselt wurde, stehen für den Schlüsselgenerator KG in jedem Teilschritt des Entschlüsselungsverfahrens die gleichen Eingangsdaten A zur Verfügung, wie im entsprechenden Teilschritt des Verschlüsselungsverfahrens. Dadurch wird in jedem Teilschritt der bereits bei der Verschlüsselung verwendete Schlüsselwert K wiedergewonnen.

Bei der Entschlüsselung wird also in Abhängigkeit von einem elektronischen Schaltkreis EC und in Abhängigkeit von einem Teil A der zu entschlüsselnden Daten ohne zusätzlichen Hilfswert ein Schlüsselwert K generiert, der genau mit dem beim Verschlüsseln in diesem Teilschritt benutzten Schlüsselwert übereinstimmt, aber trotzdem nicht, wie bei Pseudozufallsgeneratorfolgen, vorhersagbar ist und auch nicht, wie bei DES bei allen Ver- und Entschlüsselungsvorgängen für den n-ten Teilschritt gleich ist.

Wird ein erfindungsgemäßes Verfahren zum Verschlüsseln von Daten in Teilschritten abgearbeitet, denen die gleichen Funktionen FR, FP1, FP2 zugrundeliegen und sind alle dem Verschlüsselungsverfahren zugrundeliegenden Funktionen FR, FP1, FP2 selbstinvers, so kann man mit diesem Verfahren verschlüsselte Daten D′ durch nochmaliges Verschlüsseln mit dem gleichen Verfahren wieder entschlüsseln. Eine Funktion ist selbstinvers, wenn sie mit ihrer Umkehrfunktion identisch ist, wenn also beispielsweise gilt FR = FR⁻¹ oder FP1 = FP1⁻¹.

Eine selbstinverse, von Schlüsselwerte abhängige Funktion ist beispielsweise die oben erwähnte Exklusiv-ODER-Funktion, eine selbstinverse, nicht von Schlüsselwerten abhängige, für erfindungsgemäße Verfahren geeignete Funktion ist eine symmetrische Permutationsfunktion.

Es bleibt noch zu erwähnen, daß Daten im Sinne dieser Erfindung auch Programme oder Programmteile sein können, so daß sich erfindungsgemäße Verfahren auch zum Software-Schutz eignen.

**Ansprüche**

1. Verfahren zum Verschlüsseln und Entschlüsseln von Daten (D, D′), das in mehreren, gleichartigen Teilschritten (S1, S2, ... Sn) abläuft, wobei in jedem dieser Teilschritte (S1, S2, ... Sn) ein Teil (A) der zu verschlüsselnden Daten nicht verschlüsselt wird und der Rest (B) der Daten unter Zugrundelegung einer von einem Schlüsselwert (K) abhängigen, umkehrbaren Funktion (FR) abgearbeitet wird, wobei innerhalb jedes Teilschrittes (S1, S2, ... Sn) die Daten (A′, B′) mindestens einmal nach vorgegebenen Verfahren (FP1, FP2) umkehrbar und nicht von einem Schlüsselwert abhängig verändert werden, wobei Schlüsselwerte (K) über einen Schlüsselgenerator (KG) bereitgestellt werden, wobei die Schlüsselwerte (K) in Abhängigkeit von den zu verschlüsselnden oder zu entschlüsselnden Daten wechseln, wobei die Bereitstellung der Schlüsselwerte (K) von durch einen elektronischen Schaltkreis (EC) festgelegten elektrischen Größen abhängt, wobei dieser elektronische Schaltkreis (EC) in Abhängigkeit von Eingangswerten Ausgangswerte abgibt und wobei die Schlüsselwerte (K) von den Ausgangswerten dieses elektronischen Schaltkreises (EC) abhängen,
**dadurch gekennzeichnet,**
daß die mit diesem Verfahren zu verschlüsselnden Daten und die mit diesem Verfahren verschlüsselten Daten mit den Schlüsselwerten (K) derart in einer festen Beziehung stehen, daß mit den aus diesen Daten abgeleiteten Schlüsselwerten (K) sowohl eine Verschlüsselung als auch eine Entschlüsselung möglich ist.

2. Verfahren nach Anspruch 1,
**dadurch gekennzeichnet,**
daß der für den jeweiligen Teilschritt erforderliche Schlüsselwert von dem nicht verschlüsselten Teil (A) der Daten abhängt.

3. Verfahren nach einem der vorhergehenden Ansprüche,
**dadurch gekennzeichnet,**
daß das Verfahren in mindestens so vielen Teilschritten (S1, S2, ... Sn) abläuft, daß auf alle zu verschlüsselnden Daten mindestens einmal die von einem Schlüsselwert (K) abhängige Funktion (FR) angewendet wurde.

4. Verfahren nach einem der vorhergehenden Ansprüche,
**dadurch gekennzeichnet,**
daß der elektronische Schaltkreis (EC) mit Codierungswerten codierbar ist und sich somit von allen ähnlichen elektronischen Schaltkreisen unterscheiden kann und daß dieser elektronische Schaltkreis (EC) in Abhängigkeit von Eingangswerten und von den Codierungswerten Ausgangswerte abgibt.

5. Verfahren nach einem der vorhergehenden Ansprüche,
**dadurch gekennzeichnet,**
daß der zur Bereitstellung der Schlüsselwerte (K) erforderliche elektronische Schaltkreis (EC) für die Entschlüsselung von Daten identisch mit dem für die Verschlüsselung dieser Daten verwendeten elektronischen Schaltkreise (EC) ist.

6. Verfahren nach einem der vorhergehenden Ansprüche,

**dadurch gekennzeichnet,**

daß der elektronische Schaltkreis (EC) die Schlüsselwerte (K) unmittelbar bereitstellt.

7. Verfahren nach einem der Ansprüche 1, 2, 3, 4 oder 6,

**dadurch gekennzeichnet,**

daß zur Bereitstellung der Schlüsselwerte (K) bei der Verschlüsselung ein anderer elektronischer Schaltkreis (EC) verwendet wird als bei der Entschlüsselung.

8. Verfahren nach einem der vorhergehenden Ansprüche,

**dadurch gekennzeichnet,**

daß innerhalb jedes Teilschrittes (S1, S2, ... n) die Daten mindestens einmal in ihrer Anordnung nach vorgegebenen Verfahren (FP1, FP2) vertauscht werden.

9. Verfahren nach einem der vorhergehenden Ansprüche,

**dadurch gekennzeichnet,**

daß die von einem Schlüsselwert (K) abhängige Funktion (FR) und alle weiteren Funktionen, die irgendwelchen Verfahren zum Verändern der Daten (FP1, FP2) zugrundeliegen, selbstinvers sind.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 244 537 (ANT)<br>* Seite 4, Zeile 28 - Seite 6, Zeile 3 * | 1 | H 04 L 9/06 |
| A | | 2-4 | |
| | --- | | |
| Y | EP-A-0 202 989 (THOMSON-CSF)<br>* Spalte 7, Zeilen 21-33 * | 1 | |
| A | | 8 | |
| | ----- | | |

|  | RECHERCHIERTE SACHGEBIETE (Int. Cl.5) |
|---|---|
|  | H 04 L |

Der vorliegende Recherchenbericht wurde für alle Patentansprüche erstellt

| Recherchenort | Abschlußdatum der Recherche | Prüfer |
|---|---|---|
| DEN HAAG | 07-03-1990 | HOLPER G.E.E. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
.........................................................................
& : Mitglied der gleichen Patentfamilie, übereinstimmendes
   Dokument

EPO FORM 1503 03.82 (P0403)